# EUROPEAN PATENT SPECIFICATION

(11) **EP 2 137 431 B1**
(45) Date of publication and mention of the grant of the patent: **04.05.2011**
(21) Application number: 08724218.6
(22) Date of filing: 12.03.2008
(51) Int. Cl.: F16H 3/097

(54) **GEAR BOX FOR MOTOR VEHICLES AND MOTOR VEHICLE COMPRISING SAID GEAR BOX**
GETRIEBE FÜR KRAFTFAHRZEUGE UND KRAFTFAHRZEUG MIT DEM GETRIEBE
BOÎTE DE VITESSE DE VÉHICULE MOTORISÉ ET VÉHICULE LA COMPRENANT

(30) Priority: 16.03.2007 SE 0700661
(43) Date of publication of application: 30.12.2009
(73) Proprietor: Scania CV AB (PUBL), 151 87 Södertälje (SE)
(72) Inventor: NILSSON, Dag, S-151 32 Södertälje (SE)
(86) International application number: PCT/SE2008/050271
(87) International publication number: WO 2008/115133

(56) References cited:
- WO-A1-92/10381
- GB-A- 1 592 250
- GB-A- 2 079 877
- US-A- 2 612 787
- US-A- 4 635 495
- US-A- 5 150 628
- US-A- 6 105 449
- US-A1- 2006 219 033

## Description

### TECHNICAL FIELD

The present invention relates to a transmission for a motor vehicle according to the preamble of claim 1. The present invention further relates to a vehicle comprising a transmission according to claim 10.

### BACKGROUND

Heavy trucks and buses need gearboxes with a large number of gear steps, e.g. up to 14 gear steps, whereas light trucks and the like are often equipped with gearboxes with fewer gear steps.

A conventional gearbox functions in such a way that the driving power from the engine is transferred to an input shaft from which it is passed on via gears to an intermediate shaft, and from the intermediate shaft the power is transferred to a mainshaft and, via an output shaft, to a propeller shaft. The number of gears in a main gearbox varies but is most commonly three or four synchronised gears. By connecting various types of additional gears to the vehicle's main gearbox it is possible to multiply the number of gear ratios, which is necessary for heavy trucks and vehicles with heavy trailers. Connecting a so-called split gear, which is a two-speed additional unit comprising two disengageable gearwheels arranged on the input shaft, provides an intermediate step between the other gears in the main gearbox. In addition, transmissions for heavy trucks and the like are usually equipped with a so-called range gear, which is a two-speed addition connected to the output portion of the mainshaft, with ratio change via a planetary gear or spur gear.

Owing to the space occupied in modem trucks by vehicle components such as lines, coolers, electronics etc., transmissions which are more compact, particularly in the axial direction, are desirable. A disadvantage of a conventional transmission with a split gear is that the split gear constitutes an extra row of gearwheels occupying extra space. Instead of having two gearwheels for split gearing, one for low split, the other for high split, a way of reducing the number of rows of gearwheels is to arrange in the transmission a split gearwheel which can be engaged as high-split input or as low-split output. This means having only one gearwheel for low and high split, instead of two, thereby reducing the number of rows of gearwheels. This solution is conventional and forms a usual part of transmissions.

A disadvantage of such a split gearwheel is that, since it serves as either a driving or a driven wheel, the teeth are loaded in both directions, rendering it more sensitive as regards strength. Moreover, since the split gearwheel is engaged in one direction or the other, all the gearwheels rotate all the time during operation, with consequently greater load and more wear. When the wheels rotate and are dipped in oil, they are braked, causing power losses.

US 6,105,449 refers to a transmission in which the transfer of power is distributed over two intermediate shafts. The transmission is also so configured that a direct drive is effected by the input shaft and the mainshaft/output shaft being connected together and powering the vehicle by direct transfer of power. The split synchronisation is then placed in a neutral position in which all the gearwheels are disengaged. This results in economic operation and reduces gearwheel wear. However, this solution involves two split gearwheels and hence an extra row of gearwheels. A further disadvantage is that two reverse shafts are used, i.e. so total of five shafts are required. A large number of gearwheels are therefore involved, which is expensive. With five shafts and two split gearwheels, that transmission therefore occupies a large amount of space.

Transmission as above also has a split function on the reverse shaft, which means an extra reverse step, but the reverse step becomes a half gear step. For lengthy reversing it may be desirable to have a whole reverse step.

### OBJECTS OF THE INVENTION

An object of the present invention is to propose a transmission for a motor vehicle with better reversing facilities.

Another object of the present invention is to propose a compact transmission for a motor vehicle.

A further object of the present invention is to propose a high-efficiency transmission for a motor vehicle.

### SUMMARY OF THE INVENTION

These and other objects indicated by the description set out below are achieved by a transmission and a vehicle as above having the further features indicated in the characterising part of the attached independent claims 1 and 10. Preferred embodiments of the transmission according to the invention are defined in the respective attached dependent claims 2-9.

The need for a separate reverse gear shaft is eliminated by a transmission for a motor vehicle comprising an input shaft which is arranged for rotation by the driving power from an engine of the vehicle and on which at least one disengageable gearwheel is supported for rotation, a mainshaft adapted to bearing gearwheels, a first intermediate shaft adapted to bearing gearwheels, at least one of which is a disengageable gearwheel, the respective gearwheels on the mainshaft and on at least the first intermediate shaft being adapted to meshing with one another in pairs, one gearwheel in each pair being a disengageable gearwheel, and a second intermediate shaft adapted to bearing a disengageable gearwheel, the mainshaft being adapted to being rotated by power transferred from the input shaft, the first and second intermediate shafts being so arranged that the respective disengageable gearwheels on these shafts are adapted to meshing with one another, and a gearwheel on the input shaft being adapted to meshing with the gearwheel on the second intermediate shaft so that, during operation, the mainshaft is caused to rotate, in the opposite direction from the input shaft, by power transferred from the first intermediate shaft. The fact that the change of rotation of the mainshaft is effected via gearwheels on the input shaft makes it possible to use the gears on the mainshaft as reverse gears. This means that, during operation, a whole gear step can be used for reversing. Moreover, the number of rows of gearwheels is also reduced in that no extra row of gearwheels is required for reversing, resulting in a more compact transmission.

The input shaft preferably comprises a first split gearwheel and a second split gearwheel which are of different diameters, resulting in a split gear which makes it possible for the transmission to be operated in a low-split and a high-split state.

The input shaft is preferably connectable directly to the mainshaft, thereby providing a direct drive which affords the possibility, during operation, of progressive stepping of the gearing.

When the input shaft is directly connected to the mainshaft, in an economy state, the at least one disengageable gearwheel on the input shaft is preferably adapted to being disengaged, effecting a direct drive which makes it possible to operate the vehicle in such a way that only the input and output shafts, i.e. the mainshaft, rotate, with the result that, since the gearwheels of the other gears are adapted to being dipped in oil for cooling, the gearwheels on the intermediate shafts do not rotate, thereby substantially eliminating power losses due to the braking effect caused by the oil during rotation of said gearwheels, with consequently greater efficiency.

The gear step, i.e. the ratio change, from the state in which the input shaft is directly connected to the mainshaft to a lower gear state is preferably adapted to being smaller than the other gear steps. This allows the engine speed to be kept low for as long as possible, particularly in the high-range region, which is desirable, e.g. from the fuel consumption point of view. In full-speed operation, for example, when a slight uphill gradient is encountered, changing down from direct drive to a lower gear represents a small step whereby the gradient can be negotiated at relatively low engine speed, resulting in more economic operation.

The transmission is preferably so arranged that when the input shaft is directly connected to the mainshaft and the second split gearwheel is disengaged, in a high-split/direct-drive state the first split gearwheel is adapted to being meshed with a gearwheel on the first intermediate shaft so that it is rotated, and when the input shaft is directly connected to the mainshaft and the first split gearwheel is disconnected, in a low-split/direct-drive state the second split gearwheel is adapted to being meshed with a gearwheel on the second intermediate shaft so that it is rotated. The fact that, during direct-drive operation, either the first or the second split gearwheel is engaged, i.e. drives either the first or the second intermediate shaft, facilitates the synchronisation during changing down to a lower gear in that the rotating intermediate shaft helps to coordinate the speed of the gearwheels so that a smoother transition is effected, thereby reducing wear.

The disengageable gearwheels are preferably lockable by coupling means, the gearwheel on the first intermediate shaft being lockable by a fourth coupling means, and the gearwheel on the second intermediate shaft by a fifth coupling means, which means are connected to one another in such a way that when the reverse gearwheel is engaged, the gearwheel on the second intermediate shaft is disengaged, and vice versa. This means that the reverse gearwheel and the gearwheel in the split section on the second intermediate shaft cannot be engaged at the same time, resulting in a safer transmission.

### DESCRIPTION OF THE DRAWINGS

The present invention will be better understood with reference to the following detailed description read in conjunction with the attached drawings, in which the same reference numbers are used throughout for the same items in the various views, and in which:
Fig. 1 depicts schematically a plan view of a transmission according to a preferred embodiment of the present invention.
Fig. 2 depicts a plan view of the transmission in Fig. 1 in a neutral state.
Figs. 3a-f depict plan views of the transmission in Fig. 1 with the transfer of power in various engagement states.
Figs. 4a-c depict schematically cross-sectional views A-A and B-B at various sections along the transmission in Fig. 1.

### DETAILED DESCRIPTION OF THE INVENTION

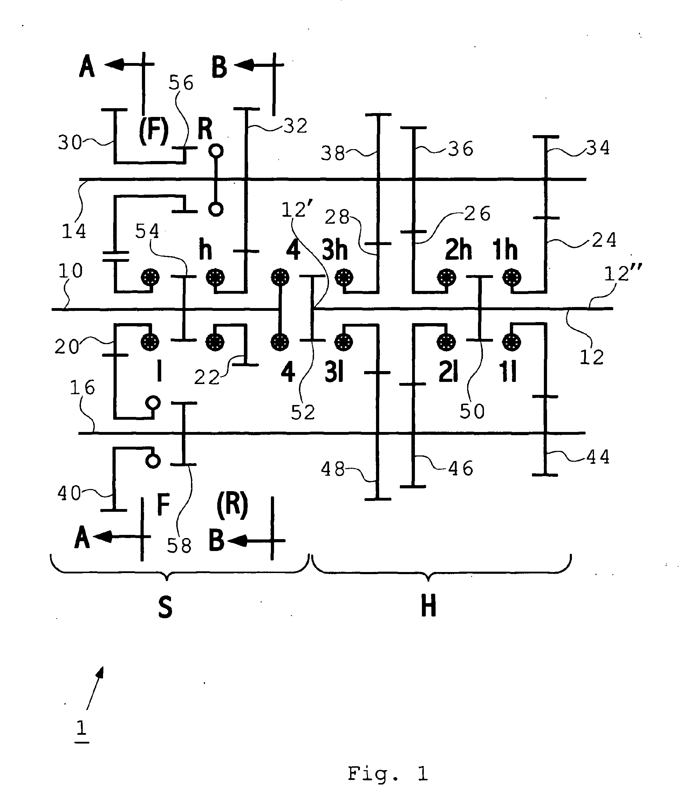

Fig. 1 depicts schematically a plan view of a transmission 1 according to a preferred embodiment of the present invention comprising an input shaft 10, a mainshaft 12 with an input end 12' and an output end 12", and a first intermediate shaft 14 and second intermediate shaft 16. The input shaft 10 and the mainshaft 12 are arranged coaxially after one another and are directly connectable to one another. The respective intermediate shafts 14, 16 are arranged substantially mutually parallel on their respective sides of the input shaft 10 and the mainshaft 12 and extend substantially along the length of the input shaft 10 and the mainshaft 12, the region adjacent to the input shaft constituting a split section S and the region adjacent to the mainshaft a main section H. The input shaft 10 is arranged for rotation by receiving power from an engine of a motor vehicle, e.g. a truck or the like.

The mainshaft 12 in the main section H bears a first gearwheel 24, a second gearwheel 26 and a third gearwheel 28 which are disengageable and supported for rotation along the shaft 12. The first gearwheel 24 is arranged on the output portion of the mainshaft 12, the third gearwheel 28 on the input portion of the mainshaft and the second gearwheel 26 on the mainshaft 12 between the first and third gearwheels, the first gearwheel 24 having a larger diameter than the second gearwheel 26 and the latter a larger diameter than third gearwheel 28. The first gearwheel 24 is therefore the first gear engaged, the second gearwheel 26 the second and the third gearwheel 28 the third. In the main section, the first intermediate shaft further bears three fixed gearwheels 34, 36, 38 and the second intermediate shaft three fixed gearwheels 44, 46, 48, the gearwheels 34, 44 meshing with the first gearwheel 24 on the mainshaft, the gearwheels 36, 46 with the second gearwheel 26 on the mainshaft, and the gearwheels 38, 48 with the third gearwheel 28 on the mainshaft.

The input shaft 10 in the split section bears a first split gearwheel 20 and a second split gearwheel 22 which are disengageably supported for rotation on the shaft 10. The diameter of the first split gearwheel 20 is smaller than the diameter of the second split gearwheel 22.

The first intermediate shaft 14 bears in the input portion of the split section S a reverse gearwheel 30 disengageably supported for rotation, and a gearwheel 32 is fastened on the first intermediate shaft 14 in the output portion of the split section S. The second intermediate shaft 16 bears in the input portion of the split section S a gearwheel 40 disengageably supported for rotation which meshes with the first split gearwheel 20 on the input shaft 10 and with the gearwheel 30 on the first intermediate shaft 14. The first split gearwheel 20 and the gearwheel 30 which is arranged on the first intermediate shaft in the input portion of the split section are separate from one another.

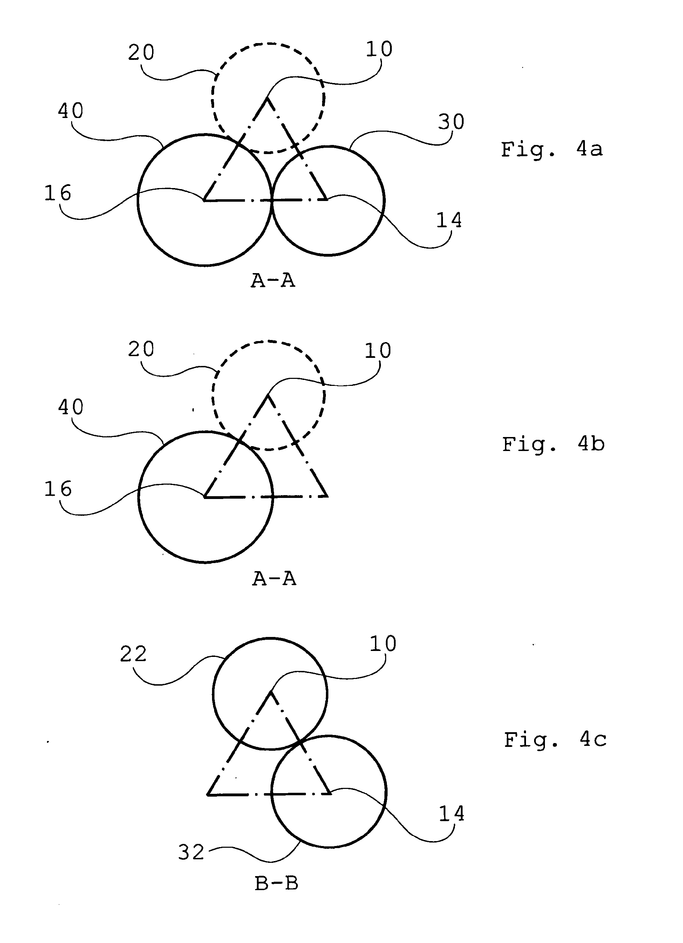

The input shaft/mainshaft and the first and second intermediate shafts form in cross-section a configuration of a substantially equilateral triangle as depicted in Fig. 4a. The first and second intermediate shafts 14, 16 preferably form a plane, whereas the input shaft 10 and the mainshaft 12 are in a different plane when the transmission 1 is installed in a vehicle, the intermediate shafts 14, 16 preferably being arranged in a plane substantially directly below the input shaft/mainshaft, with a view to oil cooling etc. Other orientations are also conceivable, possibly involving, for example, power take-off or the like, in which case the plane of the intermediate shafts is turned about the input shaft/mainshaft. This is not depicted in Fig. 1, since in order to schematically illustrate the function the intermediate shafts have been shifted radially away from the input shaft/mainshaft to be in the same plane as the input shaft/mainshaft. The mutual location of the shafts is illustrated in Fig. 4.

The gearwheels of the transmission 1 which are disengageably supported for rotation are lockable in a conventional manner by coupling means in the form of coupling sleeves 50, 52, 54, 56, 58. The first and second gearwheels 24, 26 on the mainshaft 12 are alternatingly lockable by a first coupling sleeve 50, the third gearwheel 28 on the mainshaft and the input shaft 10 and the mainshaft 12 by a second coupling sleeve 52, the first and second split gearwheels 20, 22 by a third coupling sleeve 54, the reverse gearwheel 30 by a fourth coupling sleeve 56, and the gearwheel 40 on the second intermediate shaft 16 by a fifth coupling sleeve 58. The fourth and fifth coupling sleeves 56, 58 are preferably connected to one another, preferably by a double fork, in such a way that when the reverse gearwheel 30 is engaged the gearwheel 40 on the second intermediate shaft 16 is disengaged, and vice versa. This means that the reverse gearwheel 30 and the gearwheel 40 on the second intermediate shaft cannot be engaged at the same time.

The synchronisation during the engagement of the gears is also effected in a conventional manner by synchronisation devices associated with the respective disengageable gearwheels on the input shaft and the mainshaft for speed adaptation between these shafts and the gearwheel on the input shaft/mainshaft which is engaged during gearchanging. In Fig. 1, the synchronisations are represented by asterisks (*). The reverse gearwheel 30 and the gearwheel 40 on the second intermediate shaft are preferably unsynchronised, which is represented by "o".

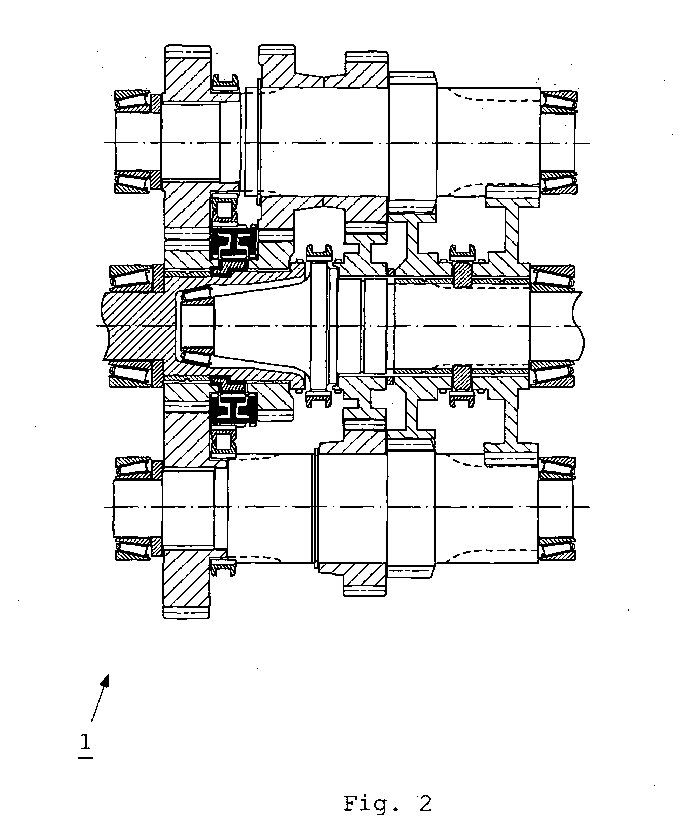

Fig. 2 depicts a more detailed plan view of the transmission 1 in Fig. 1 in a neutral state. Here again the intermediate shafts 14, 16 have been shifted radially away from the input shaft/mainshaft to make the illustration clearer.

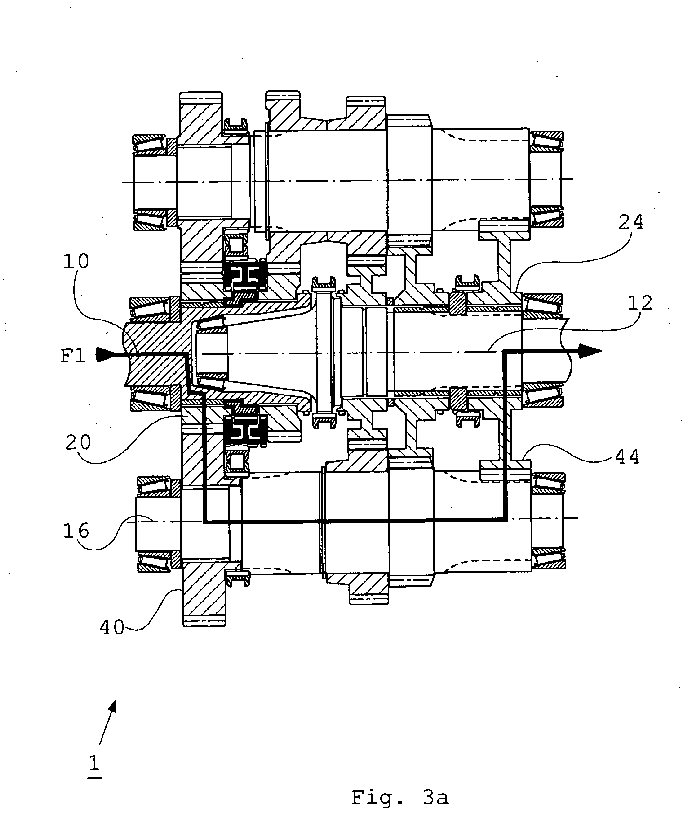

Figs. 3a-f depict plan views of the transmission in Fig. 1 with transfer of power in various engagement states, with the intermediate shafts 14, 16 shifted radially away from the input shaft/mainshaft.
Fig. 3a depicts a plan view of the transmission 1 engaged for operation at low split 1 in first gear. The first split gearwheel 20 on the input shaft 10 is consequently engaged in such a way as to mesh with the gearwheel 40 engaged on the second intermediate shaft 16, and the gearwheel 44 on the second intermediate shaft 16 in such a way as to mesh with the first gearwheel 24 engaged on the mainshaft 12 so that, during operation, the power F1 is transferred from the first split gearwheel 20 on the input shaft 10 to the first gearwheel 24 on the mainshaft 12 via the gearwheel 40 on the second intermediate shaft 16.

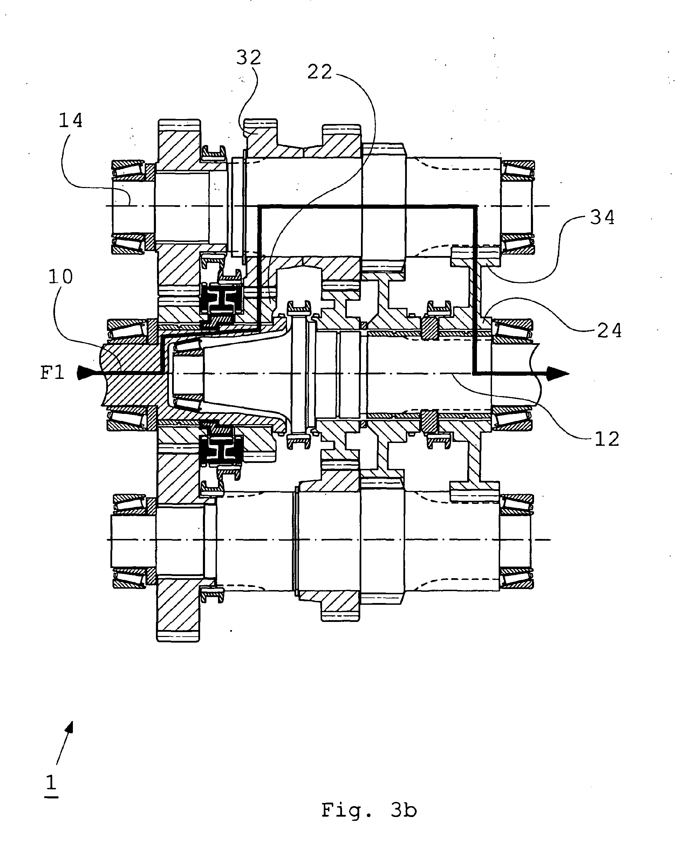

Fig. 3b depicts correspondingly a plan view of the transmission engaged for operation at high split h in first gear. The second split gearwheel 22 on the input shaft 10 is consequently engaged in such a way as to mesh with the gearwheel 32 engaged on the first intermediate shaft 14, and the gearwheel 34 engaged on the first intermediate shaft 14 with the first gearwheel 24 engaged on the mainshaft 12, so that, during operation, the power F1 is transferred from the second split gearwheel 22 on the input shaft to the first gearwheel 24 on the mainshaft 12 via the gearwheel 32 on the first intermediate shaft 14.

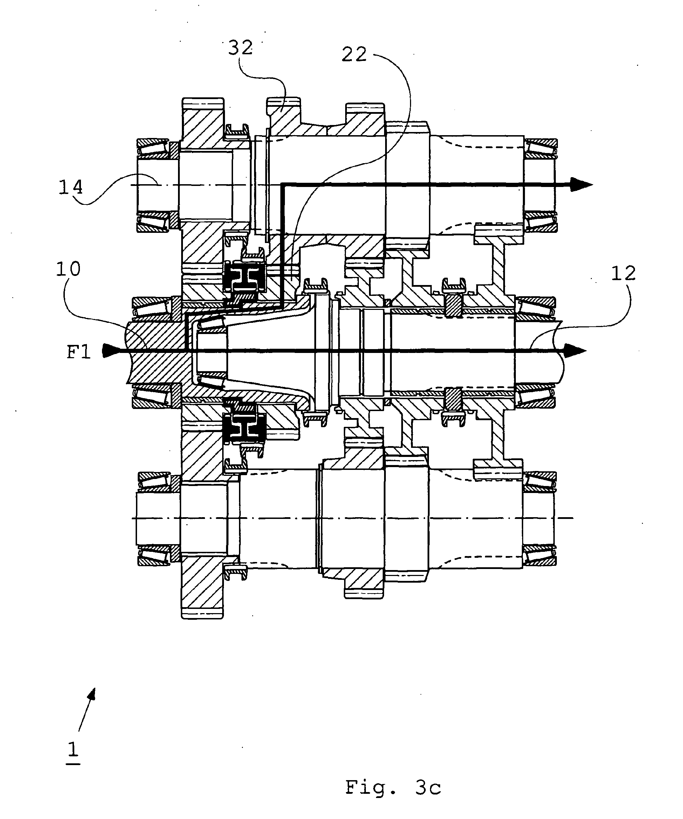

Fig. 3c depicts a plan view of the transmission 1 according to an aspect of the present invention engaged for operation with so-called direct drive, i.e. fourth gear, in combination with high split. To effect direct drive, the input shaft 10 is adapted to being connected directly to the mainshaft 12, while at the same time the second split gearwheel 22 on the input shaft 10 is engaged in such a way as to mesh with the gearwheel 32 engaged on the first intermediate shaft 14, so that, during operation, the power F1 is transferred from the input shaft 10 directly to the mainshaft, and from the second split gearwheel 22 on the input shaft 10 to the gearwheel 32 on the first intermediate shaft 14. The advantage is that the synchronisation is facilitated during changing down to a lower gear state, in this case from fourth gear position 4 to third gear position high 3h, since the rotating first intermediate shaft 14 helps to coordinate the speed of the gearwheels so that a smoother transition is effected. Direct drive may similarly be combined with low split.

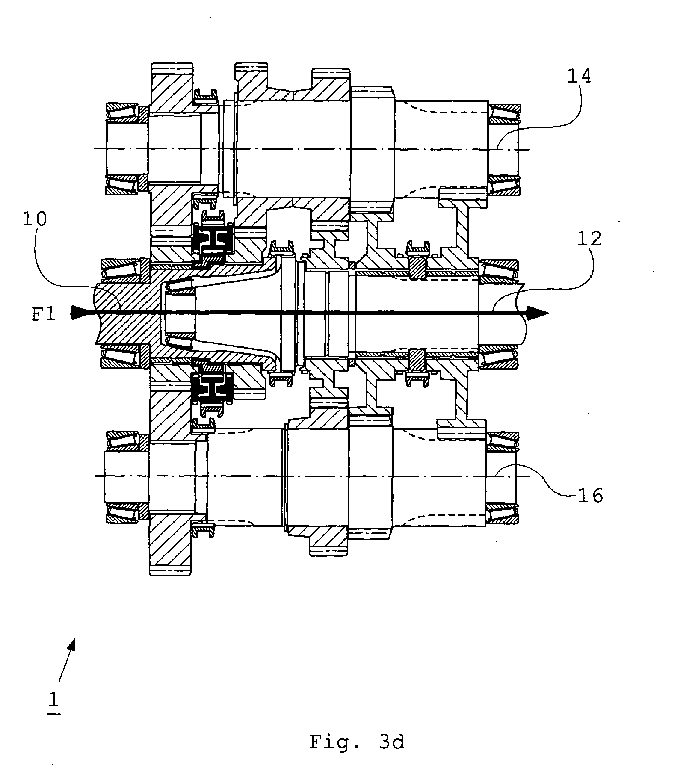

Fig. 3d depicts a plan view of the transmission 1 according to an aspect of the present invention engaged for operation with direct drive, i.e. fourth gear 4. To effect direct drive, the input shaft 10 is adapted to being connected directly to the mainshaft 12 so that, during operation, the power F1 is transferred from the input shaft 10 directly to the mainshaft 12, with all the disengageable gearwheels disengaged. An advantage is that power losses due to the braking effect caused by oil during rotation of the gearwheels of the intermediate shafts 14, 16 are substantially eliminated by their not rotating, resulting in greater efficiency, i.e. more economic operation.

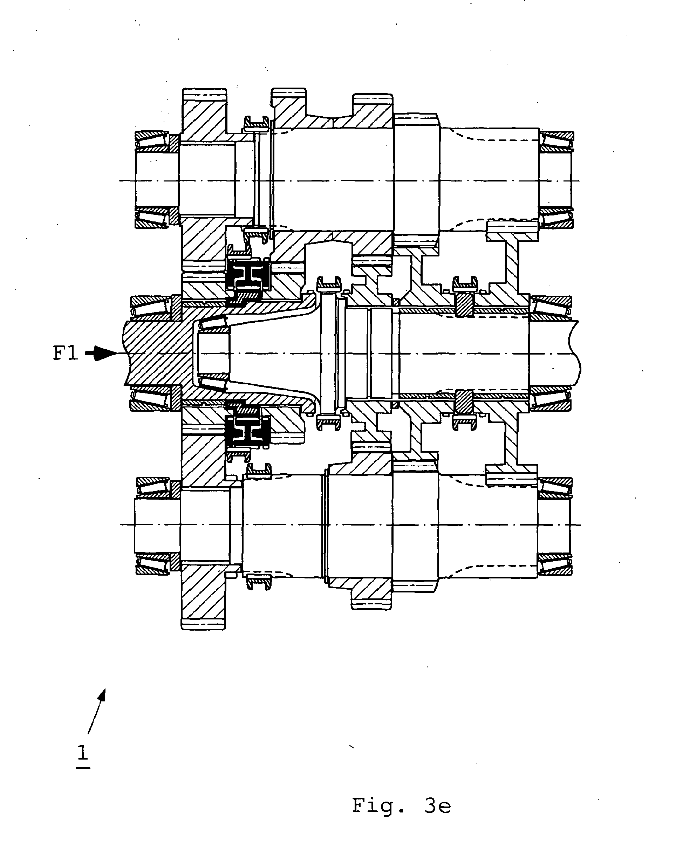

Fig. 3e depicts a plan view of the transmission in a neutral state in which all the gearwheels are disengaged, with the consequent advantage that, during operation, none of the gearwheels rotate, nor do the mainshaft or the intermediate shafts, resulting in less wear.

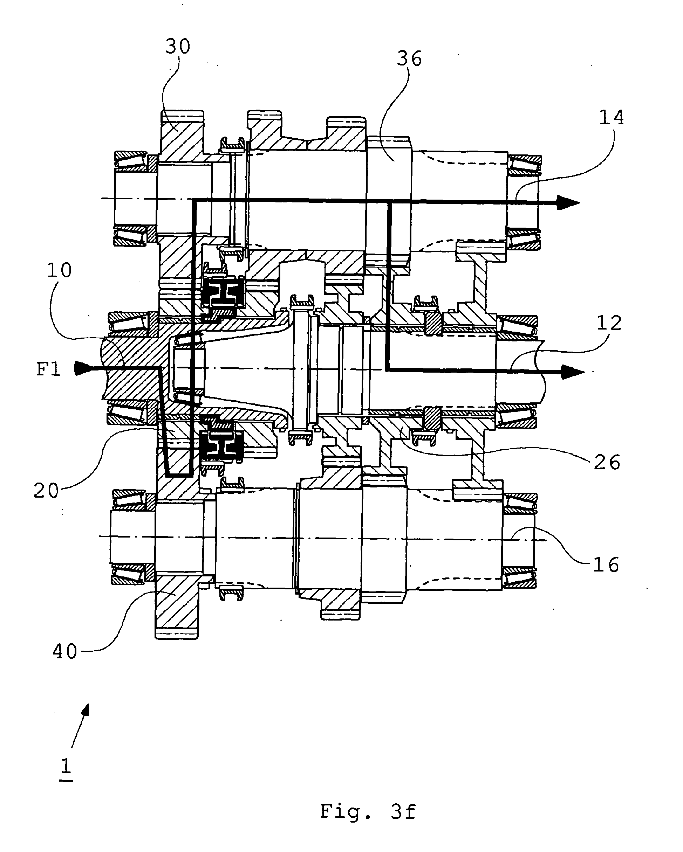

Fig. 3f depicts a plan view of the transmission 1 according to an aspect of the present invention engaged for reverse gear operation in second gear. To effect reverse gearing, the first split gearwheel 20 on the input shaft 10 is engaged in such a way as to mesh with the gearwheel 40 disengaged on the second intermediate shaft 16, and the gearwheel 40 disengaged on the second intermediate shaft 16 is further caused to mesh with the reverse gearwheel 30 engaged on the first intermediate shaft 14. Moreover, in the example in Fig. 3f, the gearwheel 36 engaged on the first intermediate shaft 14 is adapted to meshing with the second gearwheel 26 engaged on the mainshaft 12, whereby, during operation, the power F1 is transferred from the first split gearwheel 20 on the input shaft 10 to the reverse gearwheel 30 on the first intermediate shaft 14 via the gearwheel 40 on the second intermediate shaft 16 so that the first intermediate shaft 14 rotates in the opposite direction, the power from the first intermediate shaft 14 is transferred from the gearwheel 36 on the first intermediate shaft 14 to the second gearwheel 26 on the mainshaft 12 and the mainshaft 12 is caused to rotate so that reversing in second gear is effected. In a similar manner, rotation of the mainshaft can be effected so that the vehicle reverses in first or third gear. Reversing at three whole gear steps can thus be effected.
Fig. 4a depicts a cross-section A-A in Fig. 1, the input portion of the split section in reverse gear state, showing how the first split gearwheel 20 on the input shaft meshes with the gearwheel 40 on the second intermediate shaft 16, which itself meshes with the gearwheel 30 on the first intermediate shaft but not with the first split gearwheel 20, thus effecting a reverse gear.
Fig. 4b depicts the cross-section A-A in Fig. 1, the input portion of the split section in low-split gear state. Here the first split gearwheel on the input shaft 10 meshes with the gearwheel 40 on the second intermediate shaft 16, making it possible to transfer power to the mainshaft for low-split gearing.
Fig. 4c depicts the cross-section B-B in Fig. 1, the output portion of the split section in high-split gear state. Here the second split gearwheel on the input shaft 10 meshes with the gearwheel 32 on the first intermediate shaft 14, making it possible to transfer power to the mainshaft for high-split gearing.

The transmission preferably comprises a range gear (not depicted) connected in a conventional manner to the output portion of the mainshaft, which may be arranged in high range, i.e. with power passing straight through the range gear without change of ratio, with the transmission operating in the high-speed region, or in low range in which the driving power from the mainshaft passes via planet wheels so that a downward gear change is effected and the transmission operates in the low-speed region.

## Claims

1. A transmission for a motor vehicle comprising an input shaft (10) which is arranged for rotation by the driving power from an engine of the vehicle and on which at least one disengageable gearwheel (20, 22) is supported for rotation, a mainshaft (12) adapted to bearing gearwheels (24, 26, 28), a first intermediate shaft (14) adapted to bearing gearwheels, at least one of which is a disengageable gearwheel (30), the respective gearwheels on the mainshaft and on at least the first intermediate shaft being adapted to meshing with one another in pairs, one gearwheel in each pair being a disengageable gearwheel, and a second intermediate shaft (16) adapted to bearing a disengageable gearwheel (40), said mainshaft (12) being adapted to being rotated by power transferred from the input shaft, **characterised in that** the first and second intermediate shafts (14, 16) are so arranged that the respective disengageable gearwheels (30, 40) on these shafts are adapted to meshing with one another, a gearwheel (20) on the input shaft (10) being adapted to meshing with the disengageable gearwheel (40) on the second intermediate shaft (16) so that, during operation, the mainshaft is caused to rotate, in the opposite direction from the input shaft, by power transferred from the first intermediate shaft (14).

2. A transmission according to claim 1, **characterised in that** the input shaft (10) is directly connectable to the mainshaft (12).

3. A transmission according to claim 1 or 2, **characterised in that** when the input shaft (10) is directly connected to the mainshaft (12), in an economy state, the at least one disengageable gearwheel (20, 22) on the input shaft is adapted to being disengaged.

4. A transmission according to claim 2 or 3, **characterised in that** the gear step, i.e. the difference in gear ratio, from the state in which the input shaft (10) is directly connected to the mainshaft (12) to the lower gear state is adapted to being smaller than the other gear steps.

5. A transmission according to any one of claims 1-4, **characterised in that** the input shaft comprises a first split gearwheel (20) and a second split gearwheel (22) which are of different diameters.

6. A transmission according to claim 5, **characterised in that** the first split gearwheel (20) and the second split gearwheel (22) are disengageable so that, in a neutral state, they are both disengaged at the same time.

7. A transmission according to claim 5, **characterised in that** when the input shaft (10) is directly connected to the mainshaft (12) and the first split gearwheel (20) is disengaged, in a high-split/direct-drive state, the second split gearwheel (22) is adapted to being meshed with a gearwheel on the first intermediate shaft (14) so that it rotates.

8. A transmission according to claim 5, **characterised in that** when the input shaft (10) is directly connected to the mainshaft (12) and the second split gearwheel (22) is disengaged, in a low-split/direct-drive state, the first split gearwheel (20) is adapted to being meshed with a gearwheel on the second intermediate shaft so that it rotates.

9. A transmission according to any one of the foregoing claims, **characterised in that** the disengageable gearwheels are lockable by coupling means, the gearwheel (30) on the first intermediate shaft (14) being lockable by a fourth coupling means (56) and the gearwheel (40) on the second intermediate shaft (16) by a fifth coupling means (58), which means (56, 58) are connected to one another in such a way that when the reverse gearwheel (30) is engaged the gearwheel (40) on the second intermediate shaft (16) is disengaged, and vice versa.

10. A motor vehicle comprising a transmission according to any one of claims 1-9.

## Patentansprüche

1. Getriebe für ein Kraftfahrzeug, umfassend eine Eingangswelle (10), die derart angeordnet ist, dass sie von der Antriebskraft von einem Motor des Fahrzeugs in Rotation versetzt wird und an welcher mindestens ein ausrückbares Zahnrad (20, 22) drehbar gelagert ist, eine Abtriebswelle (12), die dazu ausgebildet ist, Zahnräder (24, 26, 28) zu tragen, eine erste Vorgelegewelle (14), die dazu ausgebildet ist, Zahnräder zu tragen, von denen mindestens eines ein ausrückbares Zahnrad (30) ist, wobei die jeweiligen Zahnräder an der Abtriebswelle und an zumindest der ersten Vorgelegewelle dazu ausgebildet sind, paarweise ineinander zu greifen, wobei ein Zahnrad in jedem Paar ein ausrückbares Zahnrad ist, und eine zweite Vorgelegewelle (16), die dazu ausgebildet ist, ein ausrückbares Zahnrad (40) zu tragen, wobei die Abtriebswelle (12) dazu ausgebildet ist, von der von der Eingangswelle übertragenen Antriebsleistung in Rotation versetzt zu werden,
**dadurch gekennzeichnet, dass** die erste und zweite Vorgelegewelle (14, 16) derart angeordnet sind, dass die jeweiligen ausrückbaren Zahnräder (30, 40) an diesen Wellen dazu ausgebildet sind, ineinander zu greifen, wobei ein Zahnrad (20) an der Eingangswelle (10) dazu ausgebildet ist, in das ausrückbare Zahnrad (40) an der zweiten Vorgelegewelle (16) zu greifen, so dass während dem Betrieb die Abtriebswelle von der Eingangswelle durch die von der ersten Vorgelegewelle (14) übertragenen Antriebsleistung in die entgegengesetzte Richtung in Rotation versetzt wird.

2. Getriebe nach Anspruch 1,
**dadurch gekennzeichnet, dass** die Eingangswelle (10) direkt mit der Abtriebswelle (12) verbindbar ist.

3. Getriebe nach Anspruch 1 oder 2,
**dadurch gekennzeichnet, dass** in einem Sparzustand, wenn die Eingangswelle (10) direkt mit der Abtriebswelle (12) verbunden ist, das zumindest eine ausrückbare Zahnrad (20, 22) an der Eingangswelle dazu ausgebildet ist, ausgerückt zu werden.

4. Getriebe nach Anspruch 2 oder 3,
**dadurch gekennzeichnet, dass** die Schaltstufe, d.h. der Unterschied im Übersetzungsverhältnis, von dem Zustand, in welchem die Eingangswelle (10) direkt mit der Abtriebswelle (12) verbunden ist, zu dem unteren Schaltzustand dazu ausgebildet ist, kleiner als die anderen Schaltstufen zu sein.

5. Getriebe nach einem der Ansprüche 1 bis 4,
**dadurch gekennzeichnet, dass** die Eingangswelle ein erstes geteiltes Zahnrad (20) und ein zweites geteiltes Zahnrad (22) aufweist, welche verschiedene Durchmesser aufweisen.

6. Getriebe nach Anspruch 5,
**dadurch gekennzeichnet, dass** das erste geteilte Zahnrad (20) und das zweite geteilte Zahnrad (22) so ausrückbar sind, dass in einem neutralen Zustand beide zur gleichen Zeit ausgerückt sind.

7. Getriebe nach Anspruch 5,
**dadurch gekennzeichnet, dass** dann, wenn die Eingangswelle (10) direkt mit der Abtriebswelle (12) gekoppelt ist und das erste geteilte Zahnrad (20) ausgerückt ist, in einem hochtourigen/direktangetriebenen Zustand, das zweite geteilte Zahnrad (22) dazu ausgebildet ist, in ein Zahnrad an der ersten Vorgelegewelle (14) so einzugreifen, dass es sich dreht.

8. Getriebe nach Anspruch 5,
**dadurch gekennzeichnet, dass** dann, wenn die Eingangswelle (10) direkt mit der Abtriebswelle (12) verbunden ist und das zweite geteilte Zahnrad (22) ausgerückt ist, in einem niedertourigen/direktangetriebenen Zustand das erste geteilte Zahnrad (20) dazu ausgebildet ist, in ein Zahnrad an der zweiten Vorgelegewelle so einzugreifen, dass es sich dreht.

9. Getriebe nach einem der vorangehenden Ansprüche,
**dadurch gekennzeichnet, dass** die ausrückbaren Zahnräder durch Kopplungsmittel blockierbar sind, wobei das Zahnrad (30) an der ersten Vorgelegewelle (14) durch ein viertes Kopplungsmittel (56) blockierbar ist, und das Zahnrad (40) an der zweiten Vorgelegewelle (16) durch ein fünftes Kopplungsmittel (58) blockierbar ist, wobei die Mittel (56, 58) so miteinander verbunden sind, dass wenn das Rückwärtszahnrad (30) eingerückt ist, das Zahnrad (40) an der zweiten Vorgelegewelle (16) ausgerückt ist, und umgekehrt.

10. Kraftfahrzeug umfassend ein Getriebe nach einem der Ansprüche 1 bis 9.

## Revendications

1. Boîte de vitesses pour véhicule automobile, comprenant un arbre d'entrée (10) qui est agencé pour être entraîné en rotation par la force motrice d'un moteur du véhicule et sur lequel au moins un pignon débrayable (20, 22) est monté pour tourner, un arbre principal (12) adapté pour porter des pignons (24, 26, 28), un premier arbre intermédiaire (14) adapté pour porter des pignons dont au moins un est un pignon débrayable (30), les pignons respectifs prévus sur l'arbre principal et sur au moins le premier arbre intermédiaire étant adaptés pour engrener entre eux par paires, un pignon de chaque paire étant un pignon débrayable, et un deuxième arbre intermédiaire (16) adapté pour porter un pignon débrayable (40), ledit arbre principal (12) étant adapté pour être entraîné en rotation par la force transmise par l'arbre d'entrée, **caractérisée en ce que** les premiers et deuxième arbres intermédiaires (14, 16) sont agencés de manière que les pignons débrayables respectifs (30, 40) prévus sur ces arbres soient adaptés pour engrener entre eux, un pignon (20) prévu sur l'arbre d'entrée (10) étant adapté pour engrener avec le pignon débrayable (40) prévu sur le deuxième arbre intermédiaire (16) de manière que, pendant le fonctionnement, l'arbre principal soit contraint de tourner, en sens inverse de l'arbre d'entrée, par la force transmise par le premier arbre intermédiaire (14).

2. Boîte de vitesses selon la revendication 1, **caractérisée en ce que** l'arbre d'entrée (10) peut être lié directement à l'arbre principal (12).

3. Boîte de vitesses selon la revendication 1 ou 2, **caractérisée en ce que**, lorsque l'arbre d'entrée (10) est lié directement à l'arbre principal (12, dans un état économique, l'au moins un pignon débrayable (20, 22) prévu sur par l'arbre d'entrée est adapté pour être débrayé.

4. Boîte de vitesses selon la revendication 2 ou 3, **caractérisée en ce que** le saut de rapport, c'est-à-dire la différence de rapport entre l'état dans lequel l'arbre d'entrée (10) est lié directement à l'arbre principal (12) et l'état de rapport inférieur est adapté pour être plus petit que les autres sauts de rapport.

5. Boîte de vitesses selon une quelconque des revendications 1 à 4, **caractérisée en ce que** l'arbre d'entrée comprend un premier pignon de division (20) et un deuxième pignon de division (22) qui sont de diamètres différents.

6. Boîte de vitesses selon la revendication 5, **caractérisée en ce que** le premier pignon de division (20) et le deuxième pignon de division (22) sont débrayables, de sorte que, dans un état de point mort, ils sont tous deux débrayés en même temps.

7. Boîte de vitesses selon la revendication 5, **caractérisée en ce que**, lorsque l'arbre d'entrée (10) est lié directement à l'arbre principal (12) et que le premier pignon de division (20) est débrayé, dans un état de division haute / de prise directe, le deuxième pignon de division (22) est adapté pour être engrené avec un pignon prévu sur le premier arbre intermédiaire (14), de sorte qu'il tourne.

8. Boîte de vitesses selon la revendication 5, **caractérisée en ce que**, lorsque l'arbre d'entrée (10) est lié directement à l'arbre principal (12) et que le deuxième pignon de division (22) est débrayé, dans un état de division basse / de prise directe, le premier pignon de division (20) est adapté pour être engrené avec un pignon prévu sur le deuxième arbre intermédiaire, de sorte qu'il tourne.

9. Boîte de vitesses selon une quelconque des revendications précédentes, **caractérisée en ce que** les pignons débrayables peuvent être verrouillés par des moyens d'accouplement, le pignon (30) prévu sur le premier arbre intermédiaire (14) pouvant être verrouillé par un quatrième moyen d'accouplement (56) et le pignon (40) prévu sur le deuxième arbre intermédiaire (16) par un cinquième moyen d'accouplement (58), lesquels moyens (56, 58) sont liés l'un à l'autre de manière que, lorsque le pignon de marche arrière (30) est embrayé, le pignon (40) prévu sur le deuxième arbre intermédiaire (16) soit débrayé, et vice-versa.

10. Véhicule automobile comprenant une boîte de vitesses selon une quelconque des revendications 1 à 9.
